# EUROPÄISCHE PATENTANMELDUNG

(11) **EP 1 785 798 A2**
(43) Veröffentlichungstag der Anmeldung: **16.05.2007**
(21) Anmeldenummer: 06123053.8
(22) Anmeldetag: 27.10.2006
(51) Int. Cl.: G05B 19/418

(54) **Verfahren und Vorrichtung zur Vernetzung einer Produktionsanlage**

(30) Priorität: 09.11.2005 DE 102005053440
(71) Anmelder: SIEMENS AKTIENGESELLSCHAFT, 80333 München (DE)
(72) Erfinder: Erlmann, Markus, 90449 Nürnberg (DE); Volkmann, Frank, 90475 Nürnberg (DE)

(57) **Zusammenfassung**

Die Erfindung betrifft eine Vorrichtung zur Vernetzung einer Produktionsanlage, wobei die Produktionsanlage mindestens zwei Zellen und ein Netzwerk aufweist, wobei jede der mindestens zwei Zellen eine Baugruppe aufweist, wobei in die Baugruppe jeder der mindestens zwei Zellen ein Router integriert ist, wobei das Netzwerk die Router der mindestens zwei Zellen netzwerkartig untereinander verbindet und wobei die Vorrichtung Mittel zur Erzeugung von Projektierungsinformationen während einer automatisierungstechnischen Projektierung der Produktionsanlage aufweist und wobei die Vorrichtung ferner Mittel zur Projektierung des Routers jeder Zelle durch Verwendung der Projektierungsinformationen aufweist, wodurch die Produktionsanlage während der automatisierungstechnischen Projektierung vernetzt wird.

## Beschreibung

Die Erfindung betrifft ein Verfahren und eine Vorrichtung zur Vernetzung einer Produktionsanlage im Allgemeinen und ein Verfahren und eine Vorrichtung zur Vernetzung der Produktionsanlage während der automatisierungstechnischen Projektierung im Besonderen.

Produktionsanlagen bestehen in der Regel aus mehreren Teilen. Eine Produktionsanlage kann zum Beispiel ein Fließband für die Produktion eines Kfz sein und eine Zelle in diesem Fließband ist dann zum Beispiel durch einen Roboter mit all seinen Bauteilen gegeben, der zum Beispiel zum Verschweißen der Karosserie eingesetzt wird und eine andere Zelle ist zum Beispiel durch einen weiteren Roboter gegeben, der zum Einsetzen der Windschutzscheibe verwendet wird. Die einzelnen Zellen werden in der Regel durch ein Netzwerk, das gemäß dem Internet-Protokoll adressiert ist, vernetzt. Zur Strukturierung der Vernetzung wird ein zur Verfügung stehendes Adressband in mehrere Subnetze aufgeteilt, wobei jeweils ein Subnetz einer Zelle zugeordnet wird. Zur Kopplung der Subnetze, das heißt zur Vernetzung einer Zelle mit den anderen Zellen der Produktionsanlage, ist eine Baugruppe, ein sogenannter Router erforderlich, mittels dem Datenpakete von einem Subnetz in ein anderes Subnetz weitergeleitet werden können. Ein Router bildet nach dem Stand der Technik eine eigene Baugruppe innerhalb jeder Zelle.

Beim Aufbau und der Vernetzung der Zelle wird nach dem Stand der Technik in zwei Schritten vorgegangen. Zuerst werden die einzelnen Zellen ohne Router durch einen Automatisierer automatisierungstechnisch projektiert und in einem zweiten Schritt werden die Router, die ihre eigene Projektierungssoftware und Paradigmen mitbringen, durch einen IT-Spezialisten projektiert. Das heißt, erst in dem zweiten Schritt wird die Anlage von einem IT-Spezialisten vernetzt.

Der Erfindung liegt die Aufgabe zu Grunde, ein verbessertes Verfahren und eine verbesserte Vorrichtung zur Vernetzung von Produktionsanlagen anzugeben.

Die der Erfindung zu Grunde liegenden Aufgaben werden jeweils mit den Merkmalen der unabhängigen Patentansprüche gelöst. Ausführungsformen der Erfindung sind in den abhängigen Patentansprüchen angegeben. Durch die Erfindung wird eine verbesserte Vorrichtung zur Vernetzung einer Produktionsanlage geschaffen, wobei die Produktionsanlage aus mindestens zwei Zellen und ein Netzwerk aufweist, wobei jede der mindestens zwei Zellen eine Baugruppe aufweist, wobei in die Baugruppe jede der mindestens zwei Zellen ein Router integriert ist, und wobei das Netzwerk die Router der mindestens zwei Zellen netzwerkartig untereinander verbindet.

Die Vorrichtung umfasst ferner Mittel zur Erzeugung von Projektierungsinformationen während einer automatisierungstechnischen Projektierung der Produktionsanlage und Mittel zur Projektierung des Routers jeder Zelle durch Verwendung der Projektierungsinformationen, wodurch die Produktionsanlage während der automatisierungstechnischen Projektierung vernetzt wird. Eine Zelle kann dabei eine Produktionszelle sein, aber auch eine andere organisatorische Einheit, die mit der Produktionsanlage verknüpft ist, wie etwa eine Controllingeinheit oder eine Überwachungseinheit der Produktionsanlage.

Der Router ist in eine Baugruppe integriert. Dadurch ist es möglich, die Router-Projektierung während der automatisierungstechnischen Projektierung vorzunehmen. Dies erspart den im Stand der Technik dargestellten zweiten Projektierungsschritt, wodurch eine Minimierung der Fehler durch redundante Projektierung erreicht wird. Zudem wird eine Umprojektierung der Produktionsanlage vereinfacht.

In einer Vorrichtungsvariante ist das Netzwerk gemäß dem Internet-Protokoll (IP-Protokoll) adressiert.

In einer weiteren Vorrichtungsvariante weist jede Zelle der Produktionsanlage mehrere Baugruppen und ein Subnetzwerk auf, wobei das Subnetzwerk jede Baugruppe der Zelle netzwerkartig untereinander verbindet, wobei der Router der Zelle in eine der Baugruppen integriert ist, und wobei die Vorrichtung ferner Mittel zur Erzeugung von Projektierungsinformationen während einer automatisierungstechnischen Projektierung der Zelle aufweist sowie Mittel zur Generierung einer Routing Tabelle aus den Projektierungsinformationen während der automatisierungstechnischen Projektierung der Zelle, so dass der Router mittels der Routing Tabelle auf die Baugruppen zugreifen kann.

Das heißt, dass für jede Zelle nur ein Subnetzwerk verwendet wird, um die einzelnen Baugruppen der Zelle miteinander zu vernetzen. Dadurch wird die Projektierung besonders einfach. Zudem wird die Anzahl der verwendeten IP-Adressen minimiert. Die Routing-Tabellen mittels denen der Router auf die einzelnen Baugruppen zugreift, können zum Beispiel durch ein geeignetes Projektierungswerkzeug automatisch erstellt werden, so dass ein Benutzer keine weitere Projektierungsarbeit leisten muss.

In einer anderen Vorrichtungsvariante besteht der Router einer Zelle aus mehreren Funktionseinheiten, wobei die Funktionseinheiten über mehrere Baugruppen der Zelle verteilt sind.

In einer anderen Vorrichtungsvariante ist das Subnetzwerk einer Zelle gemäß dem Internet-Protokoll (IP-Protokoll) adressiert.

In einer anderen Vorrichtungsvariante sind in die Baugruppe einer Zelle, in die der Router integriert ist, ferner Mittel für die Netzwerksicherheit integriert.

In einer anderen Vorrichtungsvariante sind in die Baugruppe, in die der Router integriert ist, ferner Mittel zur Authentifizierung von Benutzern integriert.

In einer weiteren Vorrichtungsvariante werden die Routing-Tabellen, die der Router einer Zelle umfasst, statisch erstellt.

In einer weiteren Vorrichtungsvariante sind die Routing-Tabellen, die der Router einer Zelle aufweist, über ein Routing-Protokoll dynamisch erzeugt worden.

In einer weiteren Vorrichtungsvariante weist jede Zelle der Produktionsanlage mehrere Stationen auf, wobei eine Station mehrere Baugruppen aufweist, und wobei in eine Baugruppe einer Station ein Router integriert ist, wobei jede Station ein Sub-Subnetzwerk aufweist. Das Subnetzwerk ist gemäß dem IP-Protokoll adressiert und das Sub-Subnetzwerk verbindet die Baugruppen einer Station netzwerkartig, wobei die Vorrichtungsvariante des weiteren Mittel zur Erzeugung von Projektierungsinformationen während einer automatisierungstechnischen Projektierung der Station aufweist und ferner Mittel zur Generierung einer Routing Tabelle aus den Projektierungsinformationen während der automatisierungstechnischen Projektierung der Station, so dass der Router mittels der Routing Tabelle auf die Baugruppen der Station zugreifen kann, umfasst.

Nach einer weiteren Vorrichtungsvariante weist jede Baugruppe einer Zelle eine eigene Routing-Tabelle auf. Das hat den Vorteil, dass bei Austausch der Baugruppe nicht die komplette Routing-Tabelle neu angelegt werden muss, sondern dass nur für die neue ausgetauschte Baugruppe eine neue separate Tabelle angelegt werden muss. Dies spart Instandhaltungskosten der Produktionsanlage.

In einem anderen Aspekt betrifft die Erfindung ein Verfahren zur Vernetzung einer Produktionsanlage, wobei die Produktionsanlage mindestens zwei Zellen und ein Netzwerk aufweist, wobei jede der mindestens zwei Zellen eine Baugruppe aufweist, wobei in die Baugruppe jeder der mindestens zwei Zellen ein Router integriert ist, wobei das Netzwerk die Router der mindestens zwei Zellen netzwerkartig verbindet, und wobei das Verfahren folgende Schritte aufweist: Es werden Projektierungsinformationen während einer automatisierungstechnischen Projektierung der Produktionsanlage erzeugt, die bei der Projektierung des Routers jeder Zelle verwendet werden, wodurch die Produktionsanlage während der automatisierungstechnischen Projektierung vernetzt wird. Das erfindungsgemäße Verfahren hat den Vorteil, dass der Router bzw. die Zellen einer Produktionsanlage bereits während der automatisierungstechnischen Projektierung vernetzt werden. Dadurch entfällt der zweite Schritt der Projektierung von Produktionsanlagen, indem ein IT-Spezialist die Router der Produktionsanlage erst nach dem ein Automatisierer die Produktionsanlage automatisierungstechnisch projektiert hat, vernetzt. Somit werden Fehler bei der Router-Projektierung vermieden, wodurch die Kosten für den Aufbau und die Instandhaltung einer Produktionsanlage gesenkt werden.

Ausführungsformen der Erfindung werden nachfolgend anhand der Zeichnungen näher erläutert. Es zeigen:
- Figur 1: zeigt ein Blockdiagramm einer Produktionsanlage,
- Figur 2: zeigt ein Blockdiagramm einer Zelle,
- Figur 3: zeigt ein Flussdiagramm für ein Verfahren zur Vernetzung einer Produktionsanlage,
- Figur 4: zeigt ein Flussdiagramm für ein Verfahren zur Vernetzung einer Zelle.

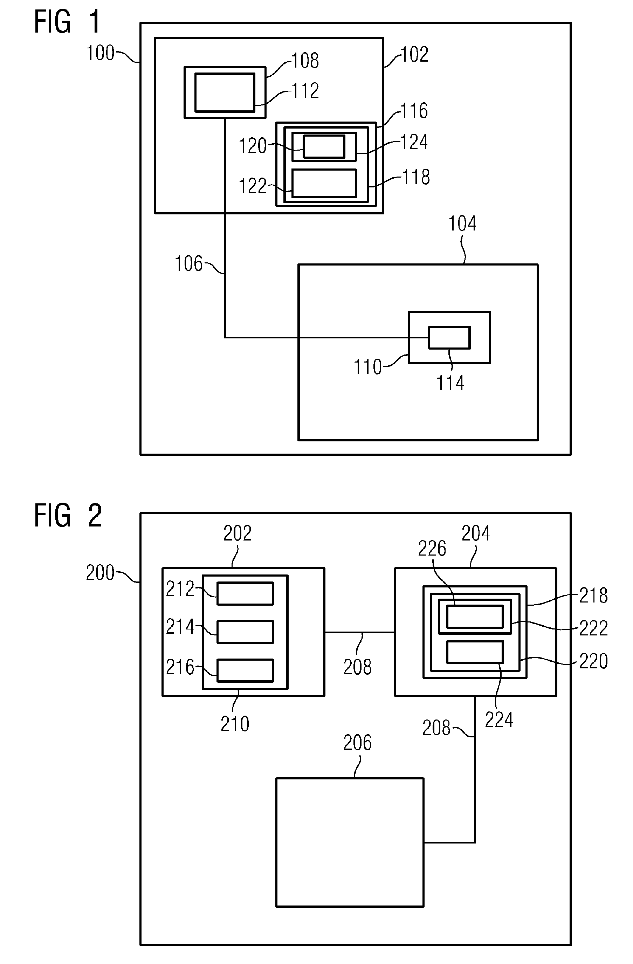

Figur 1 zeigt ein Blockdiagramm einer Produktionsanlage 100, die zwei Zellen 102 und 104 sowie ein Netzwerk 106 aufweist. Die Zelle 102 enthält eine Baugruppe 108, in die ein Router 112 integriert ist. Ebenso enthält die Zelle 104 eine Baugruppe 110, in die ein Router 114 integriert ist. Ferner enthält die Zelle 102 ein Computersystem 116. Das Computersystem 116 kann z.B. auch nur zum Zwecke der Projektierung der Zelle 102 zugeordnet sein und nach Beenden der Projektierung entfernt werden. Es ist also unter Umständen nicht dauerhafter Bestandteil der Zelle 102.

Die Router 112 und 114 können zum Beispiel separate Bauteile sein, die in die Baugruppen 118 bzw. 114 eingebaut sind, oder die Router können in Form eines Computerprogrammprodukts in die Baugruppen 108 bzw. 114, die dann in der Regel jeweils aus einem Computersystem mit einem Mikroprozessor, einem Speicher und Eingabegeräten bestehen, integriert sein. Das Netzwerk 106 verbindet den Router 112 der Zelle 102 mit dem Router 114 der Zelle 104. Dabei werden die Router über ein Internet-Protokoll adressiert. Über dieses eine Netzwerk sind also alle Zellen, wie zum Beispiel in Figur 1 gezeigte beide Zellen 102 und 104 einer Produktionsanlage miteinander verbunden. Erfindungsgemäß werden Projektierungsinformationen 120 bei der automatisierungstechnischen Projektierung durch Mittel zur Erzeugung der Projektierungsinformationen 124 erzeugt. Das kann z.B. mittels eines Computerprogrammprodukts 118 von statten gehen, das auf dem Computersystem 116 ausgeführt wird. Der Router wird dann mit im Computerprogrammprodukt 118 integrierten Mitteln zur Projektierung 122 projektiert, wobei die Projektierungsinformationen 120 dazu verwendet werden.

Figur 2 zeigt ein Blockdiagramm einer Zelle 200, die drei Baugruppen 202, 204 und 206 aufweist. Des Weiteren weist die Zelle 200 ein Subnetz 208 auf. In die Baugruppe 202 ist ein Router 210 integriert. Das Subnetz 208 verbindet die einzelnen Baugruppen 202, 204 und 206 netzwerkartig untereinander. Typischerweise ist das Subnetz ein Netz, das gemäß dem Internet-Protokoll adressiert wird. Der Router umfasst eine Routing-Tabelle 212 mittels der zum Beispiel vom Netzwerk der Produktionsanlage über den Router auf die Baugruppe 202, 204 und 206 der Zelle zugegriffen werden kann. In einer Ausführungsform, in der der Router in Form eines Computerprogrammprodukts in die Zelle implementiert ist, kann diese auch über mehrere Baugruppen der Zelle verteilt sein. Ferner kann der Router auch Mittel zur Authentifizierung 214 und Mittel zur Netzwerksicherheit 216, wie etwa eine Firewall oder einen Virenschutz aufweisen. Erfindungsgemäß werden Projektierungsinformationen 226 bei der automatisierungstechnischen Projektierung durch Mittel zur Erzeugung der Projektierungsinformationen 222 erzeugt. Das kann z.B. mittels eines Computerprogrammprodukts 220 von statten gehen, das auf dem Computersystem 218 ausgeführt wird. Wie in Fig. 2 dargestellt, kann sich das Computersystem auf einer anderen Baugruppe befinden als der Router. Der Router wird dann mit im Computerprogrammprodukt 220 integrierten Mitteln zur Projektierung 224 projektiert, wobei die Projektierungsinformationen 226 zur Routerprojektierung verwendet werden.

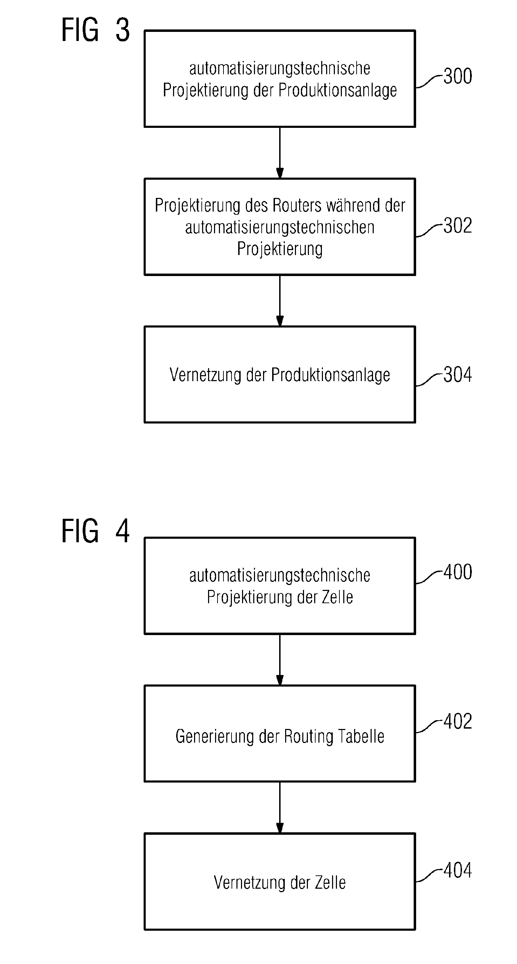

Figur 3 zeigt ein Flussdiagramm für ein Verfahren zur Vernetzung einer Produktionsanlage. Dabei wird in Schritt 300 die Produktionsanlage automatisierungstechnisch projektiert. Bei der automatisierungstechnischen Projektierung wird Projektierungsinformation erzeugt. In den Projektierungsinformationen sind in der Regel alle Parameter, die für eine Vernetzung der Projektierungsanlage benötigt werden, enthalten. In Schritt 302 wird jeder Router unter Verwendung der Projektierungsinformation projektiert. Die Projektierung kann somit während der automatisierungstechnischen Projektierung erfolgen oder erst nach Beenden der automatisierungstechnischen Projektierung.

In Schritt 304 wird die Produktionsanlage vernetzt. Dies wird typischerweise durch das Beenden der Projektierung der Router der Produktionsanlage bewerkstelligt. Die Projektierung einer Produktionsanlage wird zum Beispiel mit Hilfe des Computerprogrammprodukts Step 7 der Siemens AG durchgeführt. Das Programm Step 7 erstellt die Projektierungsinformationen in Dateien, so dass in Schritt 302 die für die Projektierung des Routers benötigten Projektierungsinformationen aus den Daten ausgelesen werden können. Dies kann zum Beispiel durch ein Computerprogrammprodukt erreicht werden, das parallel zur Software Step 7 auf einem Rechner ausgeführt wird, so dass die Projektierung parallel zur automatisierungstechnischen Projektierung erfolgen kann.

Figur 4 zeigt ein Flussdiagramm für ein Verfahren zur Vernetzung einer Zelle innerhalb einer Produktionsanlage. In Schritt 400 erfolgt eine automatisierungstechnische Projektierung der Zelle, wobei Projektierungsinformationen erzeugt werden, in denen alle Parameter, die für eine Vernetzung der Zelle benötigt werden, enthalten sind.

In Schritt 402 wird eine Routing-Tabelle generiert unter Verwendung der Projektierungsinformationen. Die Routing-Tabelle wird vom Router verwendet, um auf die Baugruppen der Zelle zugreifen zu können. Ist die Routing-Tabelle vollständig, dann ist mit Schritt 404 die Zelle vernetzt.

## Patentansprüche

1. Vorrichtung zur Vernetzung einer Produktionsanlage (100), wobei die Produktionsanlage (100) mindestens zwei Zellen (102, 104) und ein Netzwerk (106) aufweist, wobei jede der mindestens zwei Zellen (102, 104) eine Baugruppe (108, 110) aufweist, wobei in die Baugruppe (108, 110) jeder der mindestens zwei Zellen (102, 104) ein Router (112, 114) integriert ist, wobei das Netzwerk (106) die Router (112, 114) der mindestens zwei Zellen (102, 104) netzwerkartig untereinander verbindet und wobei die Vorrichtung die folgenden Mittel aufweist:
- Mittel (124) zur Erzeugung von Projektierungsinformationen (120) während einer automatisierungstechnischen Projektierung der Produktionsanlage (100);
- Mittel zur Projektierung (122) des Routers jeder Zelle durch Verwendung der Projektierungsinformationen (120), wodurch die Produktionsanlage während der automatisierungstechnischen Projektierung vernetzt wird.

2. Vorrichtung nach Anspruch 1 wobei das Netzwerk (106) gemäß dem Internet Protokoll (IP-Protokoll) adressiert ist.

3. Vorrichtung nach Anspruch 1 oder 2, wobei eine Zelle (200) der Produktionsanlage (100) ferner mehrere Baugruppen (202, 204, 206) und ein Subnetzwerk (208) aufweist, wobei das Sub-netzwerk (208) jede Baugruppe (202, 204, 206) der Zelle (200) netzwerkartig untereinander verbindet, wobei der Router (210) der Zelle (200) in eine der Baugruppen (202) integriert ist und wobei die Vorrichtung ferner folgende Mittel aufweist:
- Mittel (222) zur Erzeugung von Projektierungsinformationen (226) während einer automatisierungstechnischen Projektierung der Zelle;
- Mittel zur Generierung (224) einer Routing Tabelle (212) aus den Projektierungsinformationen (226) während der automatisierungstechnischen Projektierung der Zelle, so dass der Router (210) mittels der Routing Tabelle (212) auf die Baugruppen (202, 204, 206) zugreifen kann.

4. Vorrichtung nach Anspruch 1, 2 oder 3, wobei der Router (108, 110, 210) einer Zelle aus mehreren Funktionseinheiten besteht, wobei die Funktionseinheiten über mehrere Baugruppen (202, 204, 206) der Zelle verteilt sind.

5. Vorrichtung nach einem der Ansprüche 1 bis 4, wobei das Subnetzwerk einer Zelle gemäß dem Internet Protokoll (IP-Protokoll) adressiert ist.

6. Vorrichtung nach einem der Ansprüche 1 bis 5, wobei in die Baugruppe (202), in die der Router (210) integriert ist, ferner Mittel für die Netzwerksicherheit (216) integriert sind.

7. Vorrichtung nach einem der Ansprüche 1 bis 6, wobei in die Baugruppe (202), in die der Router (210) integriert ist, ferner Mittel zur Authentifizierung (214) von Benutzern integriert sind.

8. Vorrichtung nach einem der Ansprüche 1 bis 7, wobei die Routing-Tabellen (212), die der Router (210) einer Zelle (200) umfasst, statisch erstellt werden.

9. Vorrichtung nach einem der Ansprüche 1 bis 8, wobei die Routing-Tabellen (212), die der Router (210) einer Zelle (200) aufweist, über ein Routing-Protokoll dynamisch erzeugt werden.

10. Vorrichtung nach einem der Ansprüche 1 bis 9, wobei jede Zelle der Produktionsanlage mehrere Stationen aufweist, wobei eine Station mehrere Baugruppen aufweist, und wobei in eine Baugruppe einer Station ein Router integriert ist, wobei jede Station ein Sub-Subnetzwerk aufweist, wobei das Sub-Subnetzwerk gemäß dem IP-Protokoll adressiert ist, und wobei das Sub-Subnetzwerk die Baugruppe einer Station netzwerkartig untereinander verbindet und wobei die Vorrichtung die folgenden Mittel aufweist:
- Mittel zur Erzeugung von Projektierungsinformationen während einer automatisierungstechnischen Projektierung der Station;
- Mittel zur Generierung einer Routing Tabelle aus den Projektierungsinformationen während der automatisierungstechnischen Projektierung der Station, so dass der Router mittels der Routing Tabelle auf die Baugruppen der Station zugreifen kann.

11. Vorrichtung nach einem der Ansprüche 1 bis 10, wobei jede Baugruppe einer Zelle eine eigene Routing-Tabelle aufweist.

12. Verfahren zur Vernetzung einer Produktionsanlage (100), wobei die Produktionsanlage (100) mindestens zwei Zellen (102, 104) und ein Netzwerk (106) aufweist, wobei jede der mindestens zwei Zellen (102, 104) eine Baugruppe (108, 110) aufweist, wobei in die Baugruppe (108, 110) jeder der mindestens zwei Zellen (102, 104) ein Router (108, 110) integriert ist, wobei das Netzwerk (106) die Router (108, 110) der mindestens zwei Zellen (102, 104) netzwerkartig miteinander verbindet, und wobei das Verfahren folgende Schritte aufweist:
a) Erzeugung von Projektierungsinformationen (120) während einer automatisierungstechnischen Projektierung der Produktionsanlage (100);
b) Projektierung des Routers (108, 110) jeder Zelle (102, 104) durch Verwendung der Projektierungsinformationen (120), wodurch die Produktionsanlage (100) während der automatisierungstechnischen Projektierung vernetzt wird.

13. Verfahren nach Anspruch 12, **dadurch gekennzeichnet, dass** das Netzwerk (106) gemäß dem Internet-Protokoll (IP-Protokoll) adressiert ist, wobei bei der automatisierungstechnischen Projektierung jeweils eine IP-Adresse an jede Zelle (102, 104) vergeben wird, wobei die IP-Adresse einer Zelle (102, 104) bei der Projektierung des Routers (108, 110) der Zelle (102, 104) verwendet werden.

14. Verfahren nach Anspruch 12 oder 13, wobei eine Zelle (200) der Produktionsanlage (100) mehrere Baugruppen (202, 204, 206) und ein Subnetzwerk (208) aufweist, wobei das Subnetzwerk (208) die Baugruppen (202, 204, 206) der Zelle (200) netzwerkartig miteinander verbindet, wobei der Router (210) der Zelle in eine der Baugruppen (202) integriert ist, und wobei das Verfahren ferner die folgenden Schritte aufweist:
a) Erzeugung von Projektierungsinformationen (226) während einer automatisierungstechnischen Projektierung der Zelle;
b) Generierung einer Routing Tabelle (212) aus den Projektierungsinformationen (226) während der automatisierungstechnischen Projektierung der Zelle (200), so dass der Router (210) mittels der Routing Tabelle (212) auf die Baugruppen (202, 204, 206) zugreifen kann.

15. Verfahren nach einem der Ansprüche 12 bis 14, wobei jede Zelle der Produktionsanlage mehrere Stationen aufweist, wobei jede Station mehrere Baugruppen aufweist, und wobei in eine Baugruppe einer Station ein Router integriert ist, wobei die Station ein Sub-Subnetzwerk aufweist, wobei das Sub-Subnetzwerk gemäß dem IP-Protokoll adressiert ist, und wobei das Sub-Subnetzwerk die Baugruppen der Station netzwerkartig untereinander verbindet, und wobei das Verfahren ferner die folgenden Schritte aufweist:
a) Erzeugung von Projektierungsinformationen während einer automatisierungstechnischen Projektierung der Station;
b) Generierung einer Routing Tabelle aus den Projektierungsinformationen während der automatisierungstechnischen Projektierung der Station, so dass der Router mittels der Routing Tabelle auf die Baugruppen der Station zugreifen kann.
